# EUROPEAN PATENT SPECIFICATION

(11) **EP 3 146 220 B1**
(45) Date of publication and mention of the grant of the patent: **02.09.2020**
(21) Application number: 15720765.5
(22) Date of filing: 28.04.2015
(51) Int. Cl.: F16C 32/06

(54) **GAS BEARING SPINDLES**
GASLAGERSPINDELN
BROCHES À PALIER À GAZ

(30) Priority: 21.05.2014 GB 201409106
(43) Date of publication of application: 29.03.2017
(73) Proprietor: Novanta Technologies UK Limited, Poole, Dorset BH16 6LN (GB)
(72) Inventor: POWELL, Robin, Poole Dorset BH12 3BQ (GB)
(74) Representative: CSY London
(86) International application number: PCT/GB2015/051226
(87) International publication number: WO 2015/177502

(56) References cited:
- EP-B1- 1 250 550
- JP-A- H09 317 769
- JP-A- 2007 170 534

## Description

This invention relates to gas bearing spindle arrangements and kits, and machines including such arrangements.

The long term reliability of an air (or gas) bearing spindle is reliant on the loads applied to the shaft during operation being lower than that which would cause mechanical contact between the bearing surfaces. This means that the applied loads in service need to be managed within limits. These limits are normally defined by the process in which the air bearing is used.

Sometimes air bearing spindles will be used in situations where the load which they experience in normal use is close to the maximum allowable load. In other circumstances the load to which an air bearing is subjected will vary with time, either due to unexpected events or wear of one component or another.

Thus it is desirable to provide a system where the load on an air bearing, in particular the radial load on a shaft in an air bearing, can be monitored in some way so that excessive load can be detected and/or avoided.

As radial load is exerted on a shaft, running within an air bearing, there will tend to be radial displacement of the shaft relative to the bearing. However since the shaft is by definition rotating relative to the bearing, attempting to directly measure such radial displacement of the shaft relative to the bearing can present difficulties.

JP2007170534 describes a gas bearing spindle having an O-ring mounted inner radial bearing portion with a bearing face which faces a shaft of the spindle. The inner radial bearing portion is thereby resiliently mounted relative to an outer housing portion. This document describes the preamble of appended claim 1.

According to a first aspect of the present invention there is provided a load sensing gas bearing spindle arrangement comprising a gas bearing assembly and journalled within the gas bearing assembly a shaft, the bearing assembly comprising a housing portion and an inner radial bearing portion disposed within and resiliently mounted relative to the housing portion, the inner radial bearing portion comprising a portion having a bearing face which faces the shaft,
wherein the bearing assembly is arranged so that due to the resilient mounting, the inner radial bearing portion experiences radial displacement relative to the housing portion in response to radial load on the shaft, and the spindle arrangement comprises sensing means for sensing said radial displacement thereby sensing load on the bearing.

This arrangement allows sensing of the load on the gas bearing whilst avoiding the need for directly detecting the radial displacement between relatively rotating parts - ie the inner radial bearing portion and the shaft.

Contacting or non-contacting transducers may be conveniently used to sense the radial displacement and hence allow sensing of load. For example strain gauges, optical scales, LVDTs (Linear Variable Differential Transformers), eddy current sensors might be used.

The sensing means may be used to measure displacement or merely used to sense displacement.

The sensing means may be arranged to determine whether radial displacement has reached one or more predetermined level.

Thus it will be appreciated that in general terms, feedback given to the bearing spindle arrangement concerning the load on the spindle may be digital or analogue, progressive or step-change.

The housing portion and inner radial bearing portion may have respective contact surfaces which are arranged to mechanically contact with one another when radial load on the shaft reaches a predetermined value and are spaced from one another when the radial load is below said predetermined value and the sensing means may be arranged for sensing when such contact occurs.

This can facilitate a particularly simple and effective way of sensing load on the spindle.

The housing portion and inner radial bearing portion may be electrically isolated from one another in the absence of said contact and may be electrically contacted to one another when said contact occurs.

The sensing means may comprise electrical sensing means arranged for sensing change in an electrical parameter as contact occurs.

The sensing means may comprise acoustic sensing means arranged for acoustically sensing contact occurring.

Where the sensing means comprises an electrical sensing means an electrical signal may be applied to one of the housing portion and the inner radial bearing portion and presence of this signal detected in the other of the housing portion and the inner radial bearing portion as and when contact occurs. In some circumstances the electrical signal may be applied primarily for other purposes and incidentally used for the present purpose.

The load sensing gas bearing spindle arrangement may comprise electrical signal means for applying an electrical signal to one of the housing portion and the inner radial bearing portion.

The load sensing gas bearing spindle arrangement may comprise electrical signal detecting means for detecting an electrical signal in one of the housing portion and the inner radial bearing portion as an indicator of said contact.

The inner radial bearing portion may have an electrical lead connected thereto for use in applying a signal and/or detecting an applied signal.

The acoustic sensing means may comprise an accelerometer arranged for detecting vibrations in the spindle as a result of said contact occurring. The acoustic sensing means may comprise processing means arranged to analyse detected vibrations and determine the occurrence of a contact based on the presence of predetermined characteristics in the detected vibrations.

At least one O-ring may be disposed between the housing portion and the inner radial bearing portion so as to provide resilient mounting therebetween.

The load sensing gas bearing spindle arrangement may comprise a control system arranged to control operation of the spindle arrangement in dependence on an output of the sensing means.

According to another aspect of the present invention there is provided a load sensing gas bearing spindle kit for use with an initial gas bearing spindle having a shaft journalled in a gas bearing assembly, the kit comprising, sensing means and a replacement gas bearing assembly for replacing the initial gas bearing assembly, wherein,
the replacement bearing assembly comprises a housing portion and an inner radial bearing portion disposed within and resiliently mounted relative to the housing portion, the inner radial bearing portion comprising a portion having a bearing face for facing the shaft, wherein
the replacement bearing assembly is arranged so that due to the resilient mounting, the inner radial bearing portion will experience radial displacement relative to the housing portion in response to radial load on the shaft, and the sensing means is arranged for sensing said radial displacement.

According to another aspect of the present invention there is provided machining apparatus comprising a control system and a load sensing gas bearing spindle arrangement as defined above wherein the shaft is arranged to carry a machining tool and the control system is arranged to control machining operation of the apparatus, which is carried out using a carried tool, in dependence on an output of the sensing means.

The machining apparatus may be a grinding machine.

According to a further aspect of the present invention there is provided a method of sensing load in a gas bearing spindle, the spindle comprising a gas bearing assembly and journalled within the gas bearing assembly a shaft, the bearing assembly comprising a housing portion and an inner radial bearing portion disposed within and resiliently mounted relative to the housing portion, the inner radial bearing portion comprising a portion having a bearing face which faces the shaft,
wherein the bearing assembly is arranged so that due to the resilient mounting, the inner radial bearing portion experiences radial displacement relative to the housing portion in response to radial load on the shaft, and the method comprises the step of sensing said radial displacement, thereby sensing load on the bearing.

The optional features described following the first aspect of the invention can be equally applicable as optional features for any or all of the other aspects of the invention, with changes in wording where necessary. These features are not repeated after each aspect of the invention merely in the interests of brevity.

Embodiments of the present invention will now be described by way of example only, with reference to the accompanying drawings, in which:
Figure 1 schematically shows, in highly schematic form, a grinding machine comprising a load sensing gas bearing spindle arrangement;
Figure 2 shows a section through the load sensing gas bearing spindle arrangement of the grinding machine shown in Figure 1;
Figure 3A schematically shows part of one radial gas bearing included in the spindle shown in Figure 2 where not under excessive load;
Figure 3B shows an enlarged detail of part of the radial gas bearing shown in Figures 3A where not under excessive load;
Figure 3C shows the same gas bearing portion shown in Figure 3A, but when under load which exceeds a predetermined value;
Figure 3D shows an enlarged detail of part of the radial being shown in Figure 3C when under load which exceeds the predetermined value; and
Figure 4 shows an inner radial bearing portion of the radial gas bearing which is the subject of Figures 3A to 3D (with O-rings omitted).

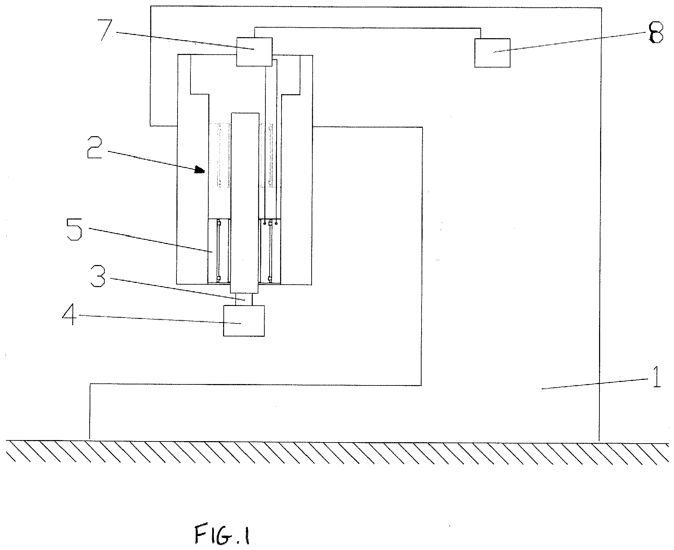

Figure 1 shows in highly schematic form, a grinding machine 1, which comprises a load sensing gas bearing spindle arrangement 2 (in this embodiment an air bearing spindle arrangement) and a control system 8 for controlling operation of the load sensing gas bearing spindle arrangement 2. Further, the grinding machine 1 comprises typical components such as motors and drive systems for driving the load sensing gas bearing spindle arrangement 2 relative to the rest of the machine 1, a platform for accepting a work piece, and so on. However these conventional components of the grinding machine are not of particular pertinence to the present invention and thus detailed depiction and description of these is omitted.

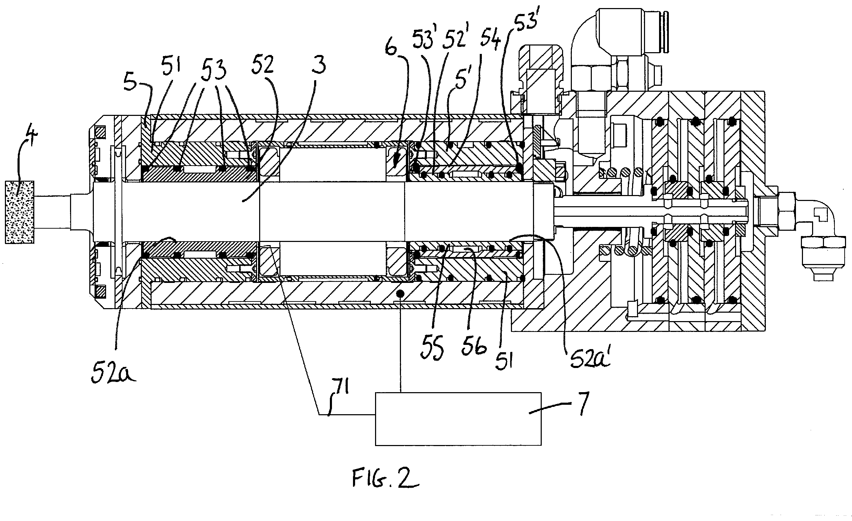

The load sensing gas bearing spindle arrangement 2 comprises a shaft 3 for carrying a machining tool, in this instance a grinding disc 4. The shaft 3 is journalled for rotation in the remainder of the spindle. The gas bearing spindle arrangement itself is shown in more detail in Figure 2. The spindle arrangement 2 comprises a pair of axially spaced radial aerostatic air bearing assemblies 5, 5' (only one of which is shown in highly schematic form in Figure 1, but both of which can be seen in more detail in Figure 2). A motor 6 is provided between the radial air bearings 5, 5' for rotationally driving the shaft 3 relative to the remainder of the spindle. The construction and operation of the motor 6 is conventional and not of particular pertinence in the present invention and thus further description of it is omitted.

In the present embodiment each radial air bearing assembly 5, 5' is slightly different from the other and thus a first of them provided towards the nose of the spindle is designated with reference numeral 5, whereas a second of them towards the rear of the spindle is designated reference numeral 5'. Furthermore the corresponding parts on each of these bearing assemblies are indicated using the same reference numeral except a prime (') is used to indicate those parts which belong to the air bearing assembly 5' provided at the rear of the spindle.

Each of the radial air bearings 5, 5' has a housing portion 51, 51' within which is resiliently mounted an inner radial bearing portion 52, 52'. The inner radial bearing portion 52, 52' has a bearing face 52a, 52a' which faces the shaft 3. In use, an air (or gas) film is formed between the bearing face 52a, 52a' and the shaft 3 to support the shaft 3 as it rotates.

The resilient mounting between the inner radial bearing portion 52, 52' and the housing portion 51, 51' is provided by a plurality of O-rings 53, 53'. In the case of the air bearing assembly 5 provided towards the nose of the spindle, there are four O-rings 53 provided to give a resilient mounting between the housing portion 51 and the inner radial bearing portion 52.

On the other hand, in the case of the bearing assembly 5' provided towards the rear of the spindle, there are two O-rings 53' provided for giving this resilient mounting.

The air bearing assembly 5' at the rear of the spindle also differs from the air bearing assembly 5 at the nose of the spindle in that it comprises an intermediate sleeve portion 54. Thus in the air bearing assembly 5' at the rear of the spindle, the inner radial bearing portion 52' comprises this intermediate sleeve portion 54 and an inner shell bearing portion 55. A coolant channel 56 is provided between the intermediate sleeve portion 54 and the inner shell bearing portion 55. These features are not directly relevant to the main subject of the present application but serve to illustrate some of the different forms of air bearing arrangement which may be used in the present techniques.

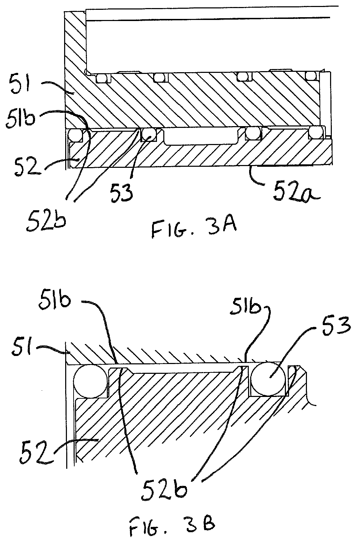

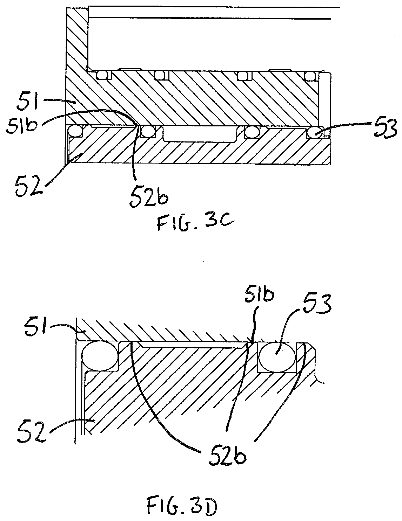

Part of the air bearing assembly 5 provided towards the nose of the spindle is shown schematically and in enlarged form in Figures 3A to 3D so that operation of the load sensing gas bearing spindle arrangement can be better understood. Figure 3A shows part of the housing portion 51 and part of the inner radial bearing portion 52 and Figure 3B shows yet a smaller part of those parts further enlarged. Figures 3A and 3B show the situation where there is no load on the air bearing or only a normal load on the air bearing. In these circumstances the inner radial bearing portion 52 is spaced from and mechanically and electrically isolated from, the housing portion 51 by virtue of the O-rings 53. The corresponding clearance between the inner radial bearing portion 52 and the housing portion 51 can only be clearly seen in Figure 3B. The O-rings 53 are of elastomeric material such as to provide electrical insulation as well as a resilient mounting. It will be noted that some parts of the inner radial bearing portion 52 project further towards the housing portion 51 than other parts. In the present embodiment these parts take the form of ring like projections 52b provided in the region of the O-rings 53. These ring like projections act as contact surfaces which will come into contact with opposing contact surfaces 51b on the housing portion 51 if and when the resilience in the O-rings 53 is overcome. To put this in another way, the contact portions 52b provided on the inner radial bearing portion 52 will contact with corresponding contact portions 51b on the housing portion when sufficient load is transferred to the inner radial bearing portion 52 to compress the O-rings 53 by a predetermined degree. In practice this occurs when sufficient load is experienced by the shaft 3 and this is transmitted via the air film between the shaft 3 and the bearing face 52a to the inner radial bearing portion 52. This situation is illustrated in Figures 3C and 3D.

It will be appreciated that the load required to cause such contact to occur will be determined by the nature of the O-rings 53 including their dimensions and the material of which they are made as well as the clearance which is provided between the contact surfaces 51b, 52b at rest. Furthermore whether such contact between the inner radial bearing portion 52 and housing portion 51 occurs before there is contact between the shaft 3 and inner radial bearing portion 52 is determined by the relative stiffness of the air bearing and the stiffness of the resilient mounting together with the respective clearances.

In practice this means that the air bearing spindle may be designed so that contact occurs between the inner radial bearing portion 52 and the housing portion 51 when radial loads on the shaft 3 are at a level which is insufficient to cause mechanical contact between the shaft 3 and the bearing face 52a.

In the present embodiment the load sensing gas bearing spindle arrangement 2 comprises sensing means 7 for sensing when such contact between the inner radial bearing portion 52 and housing portion 51 occurs. The sensing means has an output connected to the control system 8 of the grinding machine. This means that when contact is sensed by the sensing means 7 the control system 8 may give an indicator to an operator that contact has occurred, or in other embodiments might cause the machine to cease operating.

In further alternatives, the control system 8 may be arranged to log contact events and cause ceasing of operation of the machine after a predetermined number of contacts have occurred, or after contacts of above a specific duration have occurred, or so on.

In the present embodiment, the sensing means 7 is an electrical sensing means. As illustrated in schematic form only in Figures 1 and 2, the sensing means 7 is arranged for applying an electrical signal to the main body of the spindle (the actual connection can be any one of the number of different locations) and for detecting the presence of the electrical signal in the inner radial bearing portion 52. As mentioned above, in the normal condition as shown in Figures 3A and 3B, the inner radial bearing portion 52 is electrically isolated from the housing portion 51 and hence the remainder of the spindle. Thus an electrical signal applied to the main body of the spindle will only be sensed in the inner radial bearing portion 52 when a contact event has occurred.

Thus the sensing means 7 may be arranged to detect any such signal and output an indicator signal that a contact event has occurred as and when any signal is detected in the inner radial bearing portion 52.

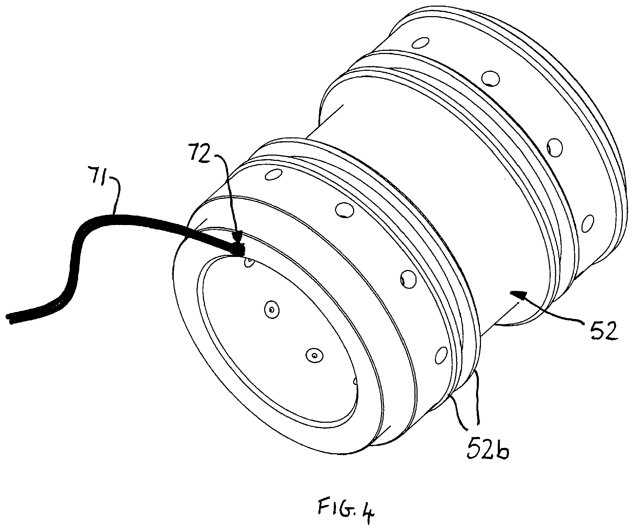

In the present embodiment an electrical sensing lead 71 from the sensing means 7 is fed through the exhaust of the air bearing and connected via a screw 72 provided in the tapped hole in an end of the inner bearing portion, as illustrated in Figure 4.

It will be appreciated that other similar detecting setups may be used to achieve the same purpose. Furthermore a similar detection technique may be used for detecting contact events in the air bearing assembly 5' provided towards the rear of the spindle.

The design and arrangement of the air bearing assemblies, and in particular the relative stiffness and clearance of the air bearing itself and the resilient mounting between the inner radial bearing portion 52 and housing portion 51, may be chosen and calibrated so that a contact event is confirmation of a load of significance which requires immediate attention or merely as an early warning signal of damage to the air bearing should the load increase further.

In one specific example considered by the applicant, an air bearing spindle having the following characteristics is used. The shaft 3 has a diameter of 25 mm and is supported in an air bearing with a working load capacity of 100 N and a centre line stiffness of 8 N per µm. The inner radial bearing portion 52 is mounted via an elastomeric mount (a set of O-rings) with a radial stiffness of 2 N per µm and a radial clearance from the housing portion 51 of 40 µm. The shaft is caused to rotate at a speed of 50,000 rpm performing a grinding operation with a side load which is a product of the material removal rate and the sharpness of the grinding wheel. With a constant material removal rate, as the wheel degrades through use, so the radial force applied to the rotating shaft 3 increases.

The radial load with a fresh wheel and the optimum feed results in a radial load of 20 N. This is well within the operating limits of the air bearing supporting the shaft 3 and results in a radial displacement of the inner radial bearing portion 52 relative to the housing portion 51 of 10 µm (20/2) representing a reduction in local clearance between the inner radial bearing portion 52 and housing portion 51.

As the grinding wheel wears, the radial force resulting from the constant material feed rate increases so that eventually the warn wheel requires a load which reaches 80 N. Under these conditions the radial displacement of the inner bearing portion 52 in the elastomeric mount reaches 40 µm (80/2) and the radial clearance drops to 0 resulting in actual mechanical contact between the inner radial bearing portion 52 and the housing portion 51. In such a case as this contact is detected, the control system 8 may be arranged to insert to pause operation after the current cut is completed and an instruction to change the grinding wheel for a fresh one can be generated.

In this example the air bearing is never loaded past 80% of its radial capacity and so is protected from damage which would result from being overloaded in operation. The grinding wheel is consumed to a level determined by actual wear rather than a prediction, maximising the wheel usage without compromising the throughput rate.

It will be appreciated that the above is just an example, and different dimensions, speeds and so on may be used in other examples and operations other than grinding may be carried out with the spindle arrangements embodying in the invention.

In further alternatives, rather than a simple sensing mechanism which senses contact between the inner radial bearing portion 52 and the housing portion 51, an alternative form of sensing means may be provided which is arranged to measure the radial displacement of the inner radial bearing portion 52 relative to a rest position and arranged to use these measurements to give an indication of the load to which the bearing is being subjected. With such an arrangement, the control system 8 may be arranged to issue different levels of warning signal or changes in operation in a response to the measurements made.

In a further alternative, rather than an electrical sensing system, an alternative sensing system may be used for detecting contact events and, for example, an acoustic sensing technique may be used. Here an accelerometer placed on the spindle may be calibrated to detect and identify contact events occurring between the inner radial bearing portion 52 and the housing portion 51, based on vibrations detected using the accelerometer. Furthermore the control system 8 in such a circumstance could include an analysis module for analysing the vibrations received and matching these against known characteristics of contact events.

## Claims

1. A load sensing gas bearing spindle arrangement comprising a gas bearing assembly (5) and journalled within the gas bearing assembly a shaft (3), the bearing assembly (5) comprising a housing portion (51) and an inner radial bearing portion (52) disposed within and resiliently mounted relative to the housing portion (51), the inner radial bearing portion (52) comprising a portion having a bearing face (52a) which faces the shaft (3),
wherein the bearing assembly (5) is arranged so that due to the resilient mounting, the inner radial bearing portion (52) experiences radial displacement relative to the housing portion (51) in response to radial load on the shaft (3), **characterised in that** the spindle arrangement comprises sensing means (7) for sensing said radial displacement thereby sensing load on the bearing.

2. A load sensing gas bearing spindle arrangement according to claim 1 in which the sensing means (7) is arranged to determine whether radial displacement has reached one or more predetermined level.

3. A load sensing gas bearing spindle arrangement according to claim 1 or claim 2 in which the housing portion (51) and inner radial bearing portion (52) have respective contact surfaces which are arranged to mechanically contact with one another when radial load on the shaft reaches a predetermined value and are spaced from one another when the radial load is below said predetermined value and the sensing means is arranged for sensing when such contact occurs.

4. A load sensing gas bearing spindle arrangement according to claim 3 in which the housing portion (51) and inner radial bearing portion (52) are electrically isolated from one another in the absence of said contact and electrically contacted to one another when said contact occurs.

5. A load sensing gas bearing spindle arrangement according to claim 3 or claim 4 in which the sensing means (7) comprises electrical sensing means arranged for sensing change in an electrical parameter as contact occurs.

6. A load sensing gas bearing spindle arrangement according to claim 5 which is arranged so that an electrical signal is applied to one of the housing portion (51) and the inner radial bearing portion (52) and presence of this signal detected in the other of the housing portion (51) and the inner radial bearing portion (52) as and when contact occurs.

7. A load sensing gas bearing spindle arrangement according to any one of claims 5 to 6 in which the inner radial bearing portion (52) has an electrical lead connected thereto for use in applying a signal and/or detecting an applied signal.

8. A load sensing gas bearing spindle arrangement according to claim 3 in which the sensing means (7) comprises acoustic sensing means arranged for acoustically sensing contact occurring.

9. A load sensing gas bearing spindle arrangement according to claim 8 in which the acoustic sensing means comprises an accelerometer arranged for detecting vibrations in the spindle as a result of said contact occurring and processing means arranged to analyse detected vibrations and determine the occurrence of a contact based on the presence of predetermined characteristics in the detected vibrations.

10. A load sensing gas bearing spindle arrangement according to any preceding claim in which at least one O-ring (53) is disposed between the housing portion (51) and the inner radial bearing portion (52) so as to provide the resilient mounting therebetween.

11. A load sensing gas bearing spindle arrangement according to any preceding claim comprising a control system (8) arranged to control operation of the spindle arrangement in dependence on an output of the sensing means (7).

12. A load sensing gas bearing spindle arrangement according to any preceding claim comprising at least one contacting or non-contacting transducer for sensing the radial displacement of the inner radial bearing portion relative to the housing portion.

13. A load sensing gas bearing spindle kit for use with a gas bearing spindle having a shaft journalled in an initial gas bearing assembly, the kit comprising,
sensing means and a replacement gas bearing assembly (5) for replacing the initial gas bearing assembly, wherein,
the replacement bearing assembly comprises a housing portion (51) and an inner radial bearing portion (52) disposed within and resiliently mounted relative to the housing portion (51), the inner radial bearing portion (52) comprising a portion having a bearing face (52a) for facing the shaft, wherein the replacement bearing assembly (5) is arranged so that due to the resilient mounting, the inner radial bearing portion (52) will experience radial displacement relative to the housing portion (51) in response to radial load on the shaft, and
the sensing means is arranged for sensing said radial displacement.

14. Machining apparatus comprising a control system and a load sensing gas bearing spindle arrangement according to any preceding claim wherein the shaft (3) is arranged to carry a machining tool and the control system (8) is arranged to control machining operation of the apparatus, which is carried out using a carried tool, in dependence on an output of the sensing means.

15. A method of sensing load in a gas bearing spindle, the spindle comprising a gas bearing assembly (5) and journalled within the gas bearing assembly a shaft (3), the bearing assembly comprising a housing portion (51) and an inner radial bearing portion (52) disposed within and resiliently mounted relative to the housing portion (51), the inner radial bearing portion (52) comprising a portion having a bearing face (52a) which faces the shaft, wherein the bearing assembly (5) is arranged so that due to the resilient mounting, the inner radial bearing portion (52) experiences radial displacement relative to the housing portion (51) in response to radial load on the shaft, **characterised in that** the method comprises the step of sensing said radial displacement, thereby sensing load on the bearing

## Patentansprüche

1. Eine Lastsensor-Gaslagerspindelordnung, die eine Gaslageranordnung (5) umfasst und wobei innerhalb der Gaslageranordnung eine Welle (3) gelagert ist, wobei die Lageranordnung (5) einen Gehäuseabschnitt (51) und einen inneren radialen Lagerabschnitt (52) umfasst, die innerhalb des Gehäuseabschnitts (51) eingerichtet und relativ dazu elastisch montiert sind, wobei der innere radiale Lagerabschnitt (52) einen Abschnitt umfasst, der eine Lagerfläche (52a) aufweist, die der Welle (3) gegenüberliegt, wobei die Lageranordnung (5) so geordnet ist, dass aufgrund der elastischen Montage der innere radiale Lagerabschnitt (52) eine radiale Verschiebung relativ zu dem Gehäuseabschnitt (51) als Reaktion auf eine radiale Belastung der Welle (3) erfährt, **dadurch gekennzeichnet, dass** die Spindelordnung ein Abtastmittel (7) zum Erfassen der radialen Verschiebung umfasst, wobei dadurch die Belastung des Lagers erfasst wird.

2. Eine Lastsensor-Gaslagerspindelordnung nach Anspruch 1, in der das Abtastmittel (7) angeordnet ist, um zu bestimmen, ob die radiale Verschiebung ein oder mehrere zuvor bestimmte Werte erreicht hat.

3. Eine Lastsensor-Gaslagerspindelordnung nach Anspruch 1 oder 2, in der der Gehäuseabschnitt (51) und der innere radiale Lagerabschnitt (52) entsprechende Kontaktoberflächen aufweisen, die so geordnet sind, dass sie miteinander mechanisch in Kontakt stehen, wenn die radiale Last auf der Welle einen zuvor bestimmten Wert erreicht, und die voneinander beabstandet sind, wenn die radiale Last unter dem zuvor bestimmten Wert liegt, und wobei das Abtastmittel zum Erfassen angeordnet ist, wenn ein solcher Kontakt auftritt.

4. Eine Lastsensor-Gaslagerspindelordnung nach Anspruch 3, in der der Gehäuseabschnitt (51) und der innere radiale Lagerabschnitt (52) in der Abwesenheit des Kontakts voneinander elektrisch isoliert sind und elektrisch miteinander in Kontakt stehen, wenn der Kontakt auftritt.

5. Eine Lastsensor-Gaslagerspindelordnung nach Anspruch 3 oder 4, in der das Abtastmittel (7) elektrische Erfassungsmittel umfasst, die zum Erfassen einer Änderung eines elektrischen Parameters beim Auftreten eines Kontakts geordnet sind.

6. Eine Lastsensor-Gaslagerspindelordnung nach Anspruch 5, die geordnet ist, sodass ein elektrisches Signal an den Gehäuseabschnitt (51) oder den inneren radialen Lagerabschnitt (52) angelegt wird und ein Vorhandensein dieses Signals an dem anderen des Gehäuseabschnitts (51) und des inneren radialen Lagerabschnitts (52) im Falle eines Kontakts festgestellt wird.

7. Eine Lastsensor-Gaslagerspindelordnung nach einem der Ansprüche 5 bis 6, in der der innere radiale Lagerabschnitt (52) eine elektrische Leitung aufweist, die daran zur Verwendung bei einem Anlegen eines Signals und/oder einem Feststellen eines angelegten Signals verbunden ist.

8. Eine Lastsensor-Gaslagerspindelordnung nach Anspruch 3, in der das Abtastmittel (7) ein akustisches Erfassungsmittel, das zum akustischen Erfassen des Auftretens des Kontakts geordnet ist, umfasst.

9. Eine Lastsensor-Gaslagerspindelordnung nach Anspruch 8, in der das akustische Erfassungsmittel einen Beschleunigungsmesser umfasst, der zum Feststellen von Schwingungen in der Spindel infolge des Auftretens des Kontakts geordnet ist, und ein Verarbeitungsmittel, das geordnet ist, um festgestellte Schwingungen zu analysieren und das Auftreten eines Kontakts basierend auf dem Vorhandensein zuvor bestimmter Eigenschaften in den festgestellten Schwingungen zu bestimmen.

10. Eine Lastsensor-Gaslagerspindelordnung nach einem vorhergehenden Anspruch, in der wenigstens ein O-Ring (53) zwischen dem Gehäuseabschnitt (51) und dem inneren radialen Lagerabschnitt (52) angeordnet ist, um das elastische Montieren dazwischen bereitzustellen.

11. Eine Lastsensor-Gaslagerspindelordnung nach einem vorhergehenden Anspruch, die ein Steuersystem (8) umfasst, das geordnet ist, um den Betrieb der Spindelordnung in Abhängigkeit von einem Ausgang des Erfassungsmittels (7) zu steuern.

12. Eine Lastsensor-Gaslagerspindelordnung nach einem vorhergehenden Anspruch, die wenigstens einen berührenden oder einen berührungslosen Wandler zum Erfassen der radialen Verschiebung des inneren radialen Lagerabschnitts relativ zu dem Gehäuseabschnitt umfasst.

13. Ein Lastsensor-Gaslagerspindel-Kit zur Verwendung mit einer Gaslagerspindel, das eine Welle aufweist, die innerhalb einer anfänglichen Gaslageranordnung gelagert ist, wobei das Kit das Abtastmittel und eine Ersatzgaslageranordnung (5) zum Ersetzen der anfänglichen Gaslageranordnung umfasst, wobei die Ersatzlageranordnung einen Gehäuseabschnitt (51) und einen inneren radialen Lagerabschnitt (52) umfasst, die innerhalb des Gehäuseabschnitts (51) eingerichtet und relativ dazu elastisch montiert sind, wobei der innere radiale Lagerabschnitt (52) einen Abschnitt umfasst, der eine Lagerfläche (52a) zum der Welle Gegenüberliegen hat, wobei die Ersatzlageranordnung (5) geordnet ist, so dass aufgrund der elastischen Montage der innere radiale Lagerabschnitt (52), als Reaktion auf die radiale Belastung auf der Welle, eine radiale Verschiebung relativ zu dem Gehäuseabschnitt (51) erfahren wird, und das Abtastmittel zum Erfassen der radialen Verschiebung geordnet ist.

14. Bearbeitungseinrichtung, die ein Steuersystem und eine Lastsensor-Gaslagerspindelordnung nach einem vorhergehenden Anspruch umfasst, wobei die Welle (3) geordnet ist, um ein Bearbeitungswerkzeug zu tragen, und das Steuersystem (8) geordnet ist, um den Bearbeitungsbetrieb der Einrichtung zu steuern, der unter Verwendung eines getragenen Werkzeugs in Abhängigkeit von einer Ausgabe der Erfassungsmittel durchgeführt wird.

15. Ein Verfahren zum Erfassen einer Last in einer Gaslagerspindel, wobei die Spindel eine Gaslageranordnung (5) umfasst und wobei innerhalb der Gaslageranordnung eine Welle (3) gelagert ist, wobei die Lageranordnung einen Gehäuseabschnitt (51) und einen inneren radialen Lagerabschnitt (52) umfasst, die innerhalb des Gehäuseabschnitts (51) eingerichtet und relativ dazu elastisch montiert sind, wobei der innere radiale Lagerabschnitt (52) einen Abschnitt umfasst, der eine Lagerfläche (52a) aufweist, die der Welle zugewandt ist, wobei die Lageranordnung (5) so geordnet ist, dass aufgrund der elastischen Montage der innere radiale Lagerabschnitt (52), als Reaktion auf die radiale Belastung der Welle, eine radiale Verschiebung relativ zu dem Gehäuseabschnitt (51) erfährt, **dadurch gekennzeichnet, dass** das Verfahren den Schritt des Erfassens der radialen Verschiebung umfasst, wobei dadurch die Belastung des Lagers erfasst wird.

## Revendications

1. Agencement de broche de palier à gaz de détection de charge comportant un ensemble de palier à gaz (5) et, tourillonné à l'intérieur de l'ensemble de palier à gaz, un arbre (3), l'ensemble de palier (5) comportant une partie formant logement (51) et une partie formant palier radial intérieur (52) disposée à l'intérieur de la partie formant logement (51) et montée de manière élastique par rapport à celle-ci, la partie formant palier radial intérieur (52) comportant une partie ayant une face de palier (52a) qui est orientée vers l'arbre (3),
dans lequel l'ensemble de palier (5) est agencé de telle sorte que, en raison du montage élastique, la partie formant palier radial intérieur (52) subit un déplacement radial par rapport à la partie formant logement (51) en réponse à toute charge radiale sur l'arbre (3), **caractérisé en ce que** l'agencement de broche comporte un moyen de détection (7) servant à détecter ledit déplacement radial pour de ce fait détecter toute charge sur le palier.

2. Agencement de broche de palier à gaz de détection de charge selon la revendication 1, dans lequel le moyen de détection (7) est agencé pour déterminer si tout déplacement radial a atteint un niveau prédéterminé ou plusieurs.

3. Agencement de broche de palier à gaz de détection de charge selon la revendication 1 ou la revendication 2, dans lequel la partie formant logement (51) et la partie formant palier radial intérieur (52) ont des surfaces de contact respectives qui sont agencées pour entrer mécaniquement en contact l'une par rapport à l'autre quand toute charge radiale sur l'arbre atteint une valeur prédéterminée et sont espacées l'une par rapport à l'autre quand la charge radiale est inférieure à ladite valeur prédéterminée et le moyen de détection est agencé pour détecter quand un tel contact se produit.

4. Agencement de broche de palier à gaz de détection de charge selon la revendication 3, dans lequel la partie formant logement (51) et la partie formant palier radial intérieur (52) sont isolées électriquement l'une par rapport à l'autre en l'absence dudit contact et mises en contact électrique l'une par rapport à l'autre quand ledit contact se produit.

5. Agencement de broche de palier à gaz de détection de charge selon la revendication 3 ou la revendication 4, dans lequel le moyen de détection (7) comporte un moyen de détection électrique agencé pour détecter tout changement au niveau d'un paramètre électrique lorsque le contact se produit.

6. Agencement de broche de palier à gaz de détection de charge selon la revendication 5, qui est agencé de telle sorte qu'un signal électrique est appliqué sur l'une parmi la partie formant logement (51) et la partie formant palier radial intérieur (52) et que la présence de ce signal est détectée dans l'autre parmi la partie formant logement (51) et la partie formant palier radial intérieur (52) dès que le contact se produit.

7. Agencement de broche de palier à gaz de détection de charge selon l'une quelconque des revendications 5 à 6, dans lequel la partie formant palier radial intérieur (52) a un conducteur électrique connecté à celui-ci à des fins d'utilisation pour appliquer un signal et/ou détecter un signal appliqué.

8. Agencement de broche de palier à gaz de détection de charge selon la revendication 3, dans lequel le moyen de détection (7) comporte un moyen de détection acoustique agencé pour détecter acoustiquement tout contact qui se produit.

9. Agencement de broche de palier à gaz de détection de charge selon la revendication 8, dans lequel le moyen de détection acoustique comporte un accéléromètre agencé pour détecter des vibrations dans la broche en conséquence dudit contact se produisant et un moyen de traitement agencé pour analyser les vibrations détectées et déterminer le fait qu'un contact s'est produit en se basant sur la présence de caractéristiques prédéterminées dans les vibrations détectées.

10. Agencement de broche de palier à gaz de détection de charge selon l'une quelconque des revendications précédentes, dans lequel au moins un joint torique (53) est disposé entre la partie formant logement (51) et la partie formant palier radial intérieur (52) de manière à mettre en œuvre le dispositif de montage élastique entre elles.

11. Agencement de broche de palier à gaz de détection de charge selon l'une quelconque des revendications précédentes, comportant un système de commande (8) agencé pour commander le fonctionnement de l'agencement de broche en fonction d'une sortie du moyen de détection (7).

12. Agencement de broche de palier à gaz de détection de charge selon l'une quelconque des revendications précédentes, comportant au moins un transducteur à contact ou sans contact servant à détecter le déplacement radial de la partie formant palier radial intérieur par rapport à la partie formant logement.

13. Kit de broche de palier à gaz de détection de charge servant à des fins d'utilisation avec une broche de palier à gaz ayant un arbre tourillonné dans un ensemble de palier à gaz initial, le kit comportant,
un moyen de détection et un ensemble de palier à gaz de remplacement (5) servant à remplacer l'ensemble de palier à gaz initial, dans lequel
l'ensemble de palier de remplacement comporte une partie formant logement (51) et une partie formant palier radial intérieur (52) disposée à l'intérieur de la partie formant logement (51) et montée de manière élastique par rapport à celle-ci, la partie formant palier radial intérieur (52) comportant une partie ayant une face de palier (52a) à des fins d'orientation vers l'arbre, dans lequel l'ensemble de palier de remplacement (5) est agencé de telle sorte que, en raison du montage élastique, la partie formant palier radial intérieur (52) subit un déplacement radial par rapport à la partie formant logement (51) en réponse à toute charge radiale sur l'arbre, et
le moyen de détection est agencé pour détecter ledit déplacement radial.

14. Appareil d'usinage comportant un système de commande et un agencement de broche de palier à gaz de détection de charge selon l'une quelconque des revendications précédentes, dans lequel l'arbre (3) est agencé pour porter un outil d'usinage et le système de commande (8) est agencé pour commander toute opération d'usinage de l'appareil, qui est effectuée en utilisant un outil porté, en fonction d'une sortie du moyen de détection.

15. Procédé de détection de charge dans une broche de palier à gaz, la broche comportant un ensemble de palier à gaz (5) et, tourillonné à l'intérieur de l'ensemble de palier à gaz, un arbre (3), l'ensemble de palier comportant une partie formant logement (51) et une partie formant palier radial intérieur (52) disposée à l'intérieur de la partie formant logement (51) et montée de manière élastique par rapport à celle-ci, la partie formant palier radial intérieur (52) comportant une partie ayant une face de palier (52a) qui est orientée vers l'arbre, dans lequel l'ensemble de palier (5) est agencé de telle sorte que, en raison du montage élastique, la partie formant palier radial intérieur (52) subit un déplacement radial par rapport à la partie formant logement (51) en réponse à toute charge radiale sur l'arbre, **caractérisé en ce que** le procédé comporte l'étape consistant à détecter ledit déplacement radial, pour de ce fait détecter toute charge sur le palier.
